# EUROPÄISCHE PATENTSCHRIFT

(11) **EP 1 992 148 B1**
(45) Veröffentlichungstag und Bekanntmachung des Hinweises auf die Patenterteilung: **03.10.2018**
(21) Anmeldenummer: 07712491.5
(22) Anmeldetag: 08.03.2007
(51) Int. Cl.: H04M 1/2745, H04M 3/493

(54) **VERFAHREN UND TELEFON ZUR NUTZUNG VON IN EINER TELEFONBUCHDATENBANK EINES SERVERS GESPEICHERTEN TELEFONBUCHDATEN**
METHOD AND TELEPHONE FOR USE OF TELEPHONE BOOK DATA STORED IN A TELEPHONE BOOK DATA BANK IN A SERVER
PROCÉDÉ ET TÉLÉPHONE CONÇUS POUR UTILISER DES DONNÉES D'ANNUAIRE TÉLÉPHONIQUE ENREGISTRÉES DANS UNE BANQUE DE DONNÉES D'ANNUAIRE TÉLÉPHONIQUE D'UN SERVEUR

(30) Priorität: 08.03.2006 EP 06004747
(43) Veröffentlichungstag der Anmeldung: 19.11.2008
(73) Patentinhaber: Gigaset Communications GmbH, 40549 Düsseldorf (DE)
(72) Erfinder: MÖSKER, Volker, 46419 Isselburg (DE)
(74) Vertreter: Michalski Hüttermann & Partner Patentanwälte mbB
(86) Internationale Anmeldenummer: PCT/EP2007/052188
(87) Internationale Veröffentlichungsnummer: WO 2007/101878

(56) Entgegenhaltungen:
- WO-A-97/16935
- WO-A-2004/049130
- FELLERMAYR, LEONHARD: "ISDN-Anruf-Monitoring unter Linux"[Online] 10. Februar 2005 (2005-02-10), XP002437639 Gefunden im Internet: URL:http://slacky.de/docs/projects/isdnmon itor.html> [gefunden am 2007-06-13]
- SCOBBY: "VBOX Script, Email mit Mp3 Nachricht und Telefonbuchauskunft" 16. Juli 2005 (2005-07-16), XP002437640 Gefunden im Internet: URL:www.linuxforen.de/forums/showthread.ph p?t=189361> [gefunden am 2007-06-13]
- SCHALL, D. AIELLO, M. DUSTDAR, S.: "Web Services on Embedded Devices" INTERNATIONAL JOURNAL OF WEB INFORMATION SYSTEMS, Bd. 1, Nr. 1, März 2005 (2005-03), Seiten 1-6, XP002437641
- KRAUSS J ET AL: "ASP SERVICES FOR RESIDENTIALS-A CHALLENGE FOR NETWORK OPERATORS?" BRITISH TELECOMMUNICATIONS ENGINEERING, BRITISH TELECOMMUNICATIONS ENGINEERING. LONDON, GB, Bd. 1, Nr. 2, Juli 2002 (2002-07), Seiten 76-80, XP001162355 ISSN: 0262-401X

## Beschreibung

Die Nutzung von in einer Telefonbuchdatenbank eines Servers gespeicherten Telefonbuchdaten durch ein Telefon bzw. die Realisierung einer regulären und/oder inversen Telefonbuchsuche im öffentlichen/externen Telefonbuch basiert gemäß dem Stand der Technik auf webbasierte Mechanismen, wie z.B. WAP- oder HTML-Seiten (**W**ireless **A**pplication **P**rotocol; **H**yper-**T**ext **M**arkup **L**anguage).

Wenn im Folgenden von einer Telefonbuchdatenbank die Rede ist, so besteht der Inhalt dieser Datenbank nicht nur aus einem Telefonverzeichnis (Telefonbuch), sondern kann vielmehr auch jede Art und Form eines Kommunikationsverzeichnisses, z.B. ein Branchenverzeichnis, beinhalten. Unter einer regulären Telefonbuchsuche versteht man, die Suche nach übrigen zu einer bekannten Telefonnummer bzw. Rufnummer in der Datenbank gespeicherten Informationen/Daten. Im Unterschied dazu ist eine inverse Suche die Suche nach der zu den gespeicherten Informationen/Daten gehörigen Telefonnummer/Rufnummer. Die Telefonnummer/Rufnummer mit den korrespondierenden Informationen/Daten bildet einen Datensatz der Telefonbuchdatenbank, wovon es je nach Größe der Datenbank eine Vielzahl gibt. Die jeweils mit der Telefonnummer/Rufnummer eines Teilnehmers den Datensatz bildenden Informationen/Daten umfassen im Fall des Telefonverzeichnisses beispielsweise den Namen (z.B. Vor- und Nachname), den Wohnort, die Straße, das (Bundes-)Land, die Postleitzahl, die Fax-Nummer, die Email-Adresse etc. des Teilnehmers, während im Fall des Branchenverzeichnisses die Informationen/Daten noch zusätzlich die eine Rubrik in dem Branchenverzeichnis umfasst.

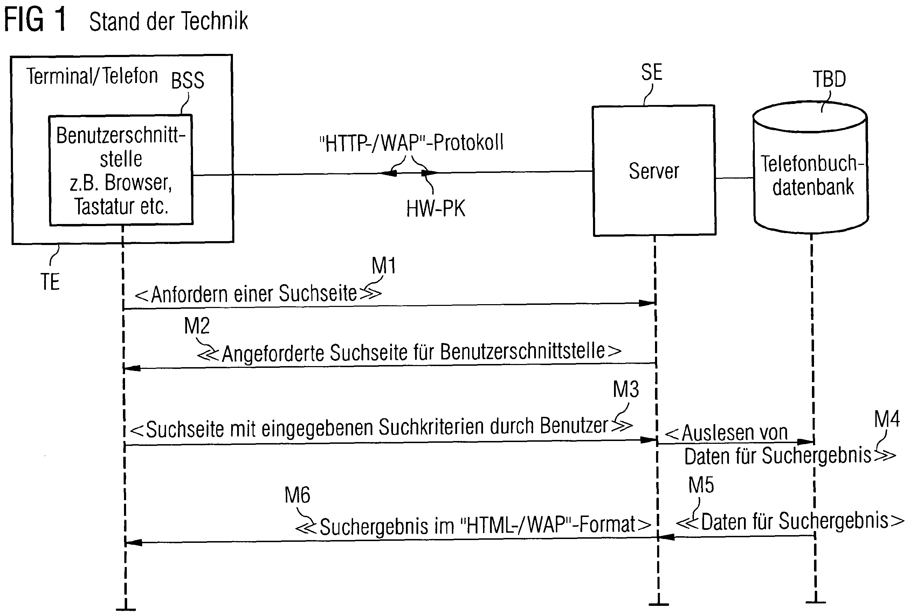

FIGUR 1 zeigt anhand eines Meldungsflussdiagramms, wie eine webbasierte Telefonbuchsuche gemäß dem Stand der Technik prinzipiell durchgeführt wird. Ein Terminal/Telefon TE, z.B. ein mit einer Benutzerschnittstelle BSS, die z.B. einen Browser und eine Tastatur umfasst, ist mit einem Server SE verbunden und hat über diese Verbindung einen Zugriff auf eine dem Server SE zugeordnete Telefonbuchdatenbank TBD. Bei dem Terminals TE handelt es sich beispielsweise um einen Personal Computer mit einem HTTP/HTML-basierten (**H**yper-**T**ext **T**ransfe**r P**rotocol; **H**yper-**T**ext **M**arkup **L**anguage) Internet-Browser (Web-Browser), während das Telefon beispielsweise ein WAP-fähiges Mobiltelefon ist. Damit das Terminal/Telefon TE je nach Ausgestaltung auf in der Telefonbuchdatenbank TBD gespeicherte Telebuchdaten zugreifen kann - z.B. im Rahmen einer Telefonbuchsuche, wird für diese Zugriffe ein "HTTP-/WAP"-Protokoll HW-PK zwischen dem Terminal/Telefon TE und dem Server SE verwendet. Gemäß diesem Protokoll HW-PK fordert das Terminal/Telefon TE mit einer ersten Meldung M1 eine Suchseite von dem Server SE an. Danach wird von dem Server SE mit einer zweiten Meldung M2 die angeforderte Suchseite der Benutzerschnittstelle BSS des Terminals/Telefons TE übertragen. Über die Benutzerschnittstelle BSS werden daraufhin von dem Benutzer des Terminals/Telefons TE Suchkriterien auf der vom Server SE erhaltenen Suchseite eingegeben. Nach dieser Eingabe wird die mit Suchkriterien versehene Suchseite mit einer dritten Meldung M3 von dem Terminal/Telefon TE an den Server SE gesendet. Sobald der Server SE die mit der Suchseite übertragenen Suchkriterien erfasst hat, initiiert dieser mit einer vierten Meldung M4 an die Telefonbuchdatenbank TBD das Auslesen von zu den Suchkriterien korrespondierenden Daten für ein Suchergebnis aus der Telefonbuchdatenbank TBD. Mit einer fünften Meldung M5 werden die gefundenen Daten für das Suchergebnis von der Telefonbuchdatenbank TBD zum Server SE übertragen. Der Server SE stellt anschließend die erhaltenen Daten in ein Suchergebnis im "HTML-/WAP"-Format zusammen und schickt dieses Suchergebnisses in einer sechsten Meldung M6 dem Terminal/Telefon TE, wo die übermittelten Suchergebnisse nicht automatisch weiterverarbeitet werden können.

Zu diesem Stand der Technik gibt es im Internet - vgl. die nachfolgenden "Links"-weitere Informationen:
http://www.Slacky.de/docs/projects/isdnmonitor.html (Nutzung der Inverssuche bei der deutschen Telekom für Linux-basiertes ISDN-Anrufmonitoring auf der Basis der T-Com-Webseite).
http://www.iir.at/pdfs/award2004_gewinner.pdf (3G-Telefonbuch für UMTS-Geräte basierend auf den SuperPages von Hutchison 3G Austria GmbH).
http://www.linuxforen.de/forums/showthread.php?t=189361 (Script, um die Inverssuche der T-Com für den Linux-Anrufbeantworter VBOX zu nutzen, basiert ebenfalls auf der T-Com Webseite).

WO 97/16935 offenbart ein Verfahren zum Speichern von Verzeichnisinformationen in einem Mobilfunktelefon, wobei das Mobilfunksystem mit einem Netzwerkdatenbankverzeichnis ausgestattet ist, welches eine Vielzahl von Telefonnummern enthält. Der Nutzer wird aufgefordert, Suchkriterien einzugeben, welche akzeptiert werden. Ein Suchanfragendatensignal wird generiert und in Erwiderung der eingegebenen Suchkriterien an das Mobilfunksystem gesendet. Das Netzwerkdatenbankverzeichnis wird nach übereinstimmenden Suchkriterien durchsucht und eine oder mehrere Telefonnummern können identifiziert werden. Diese Telefonnummern werden an das Mobilfunktelefon zurück übersendet und in einem Speicher des Mobilfunktelefones abgelegt.

Die der Erfindung zugrunde liegende Aufgabe besteht darin, ein Verfahren und ein Telefon zur Nutzung von in einer Telefonbuchdatenbank eines Servers gespeicherten Telefonbuchdaten anzugeben, bei dem die Telefonbuchdaten im Telefon für Telefonapplikationen genutzt werden.

Diese Aufgabe wird jeweils durch die Merkmale des Patentanspruches 1 und des Patentanspruches 10 gelöst.

Die der Erfindung zugrunde liegende Idee besteht darin, einen Teil der Telefonbuchabfrage in das Telefon zu verlagern und eine direkte Telefonbuchsuche in einer Telefondatenbank eines Servers mittels eines dedizierten Protokolls vom Telefon aus durch Übermittlung von Suchkriterien zu starten (Prinzip eines "Embedded Systems"). Das Telefon erhält im Gegenzug die Suchergebnisse und ist aufgrund von Markierungen in dem dedizierten Protokoll in der Lage, die Semantik der Suchergebnisse zu verstehen, so dass es die Daten der Suchergebnisse für telefonspezifische Operationen, z. B. abgehender Telefonanruf, Speicherung in ein lokales Telefonbuch, Auflösung von Rufnummerinformationen (CLIP-Informationen; **C**alling **L**ine **I**dentification **P**resentation) bei eingehendem Telefonanruf, direkt nutzen kann. Die Ergebnisse der Suche werden also unmittelbar weiterverwendet bzw. weiterverarbeitet. So kann beispielsweise eine gefundene Rufnummer direkt gewählt oder lokal in einen Telefonbuchspeicher des Telefons gespeichert werden. Darüber hinaus kann einem eingehenden Telefonanruf mit Rufnummerübermittlung (Anruf mit CLIP) direkt ein Name und ggf. Adresse zugeordnet werden, falls die übermittelte Rufnummer nicht im lokalen Telefonbuchspeicher enthalten ist.

Das Wesen der Erfindung liegt in der Nutzung des dedizierten Protokolls zur Signalisierung anstelle einer Web-Schnittstelle und deren Umsetzung in einem Telefon. Die Definition eines solchen Protokolls erfolgt vorzugsweise zusammen mit einem Dienstanbieter für Telefonbuchsuchen. Eventuell lässt sich ein solches Protokoll auch standardisieren.

Das dediziertes Protokoll ist vorzugsweise für kleine, proprietäre "Embedded Systeme" ausgelegt und kann sowohl auf einen Dienstanbieter (Service-Provider) zugeschnitten als auch proprietär sein. Zudem ist das technische Konzept der Erfindung im Prinzip auch für andere Dienste nutzbar.

Für das angesprochene Protokoll sind im Prinzip zwei Ausführungsformen realisierbar:
a) Realisierung des Services über ein auch bei CLIP (Calling **L**ine **I**dentification **P**resentation) verwendetes Übertragungsverfahren (FSK-Modulationsverfahren; **F**requency **S**hift **K**eying) und einem noch zu definierenden Protokoll. D.h., das Telefon bekommt anstelle oder zusätzlich zur Telefonnummer den Namen und/oder die Adresse des Anrufenden übermittelt. Alternativ dazu wäre auch eine selektive Suche über dieses Verfahren möglich, sofern ein Rückkanal realisiert ist. Der Nutzer bekommt z.B. eine CLIP-Nummer angezeigt, die er nicht kennt und kann dann die inverse Telefonbuchsuche initiieren. Auch die Suche nach einer Telefonnummer anhand eines Namens und einer Adresse lässt sich so realisieren.
b) Realisierung über ein IP-basiertes (**I**nternet **P**rotocol) Protokoll bei Telefonen, die einen Zugang zum Internet haben. Die Kommunikation mit einer Telefonbuchdatenbank im Internet wird über ein dediziertes Protokoll realisiert. Hier kann z.B. eine einfache, "XML-HTML-Klartext"-basierte (E**X**tended **M**arkup **L**anguage; **H**yper-**T**ext **M**arkup **L**anguage) Datenkommunikation (im Prinzip reine Datenbankabfragen) im Sinne eines "Client-Server"-basierten Konzepts stattfinden, um dem Telefonbenutzer die zuvor beschriebenen Szenarien (Nummernsuche anhand Name/Adresse, inverse Suche anhand Telefonnummer) zu ermöglichen.

Zu beiden Vorgehensweisen ist anzumerken, dass verschiedene Geschäftsmodelle zum Tragen kommen können:
- kostenlose Nutzung des Dienstes,
- kostenpflichtige Nutzung des Dienstes als "Pay per Use" oder auf monatlicher Basis als Grundgebühr.

Haupteinsatzgebiet der Erfindung sind Telefone, z.B. DECT-, WLAN-, Bluetooth-, GSM-, UMTS-, Fernsprechapparate mit ETHERNET-Anschluss, etc., mit Anbindung an ein paketvermitteltes Netzwerk, z.B. dem Internet, und/oder an leitungsvermitteltes Netzwerk, z.B. Public Switched Telephone Network (PSTN), Integrated Servcies Digital Network (ISDN), unter Nutzung von "Digital Subscriber Line (DSL)"-Technologien.

Zusätzliche vorteilhafte Weiterbildungen der Erfindung sind in den weiteren Unteransprüchen sowie der nachfolgenden Beschreibung eines Ausführungsbeispieles der Erfindung angegeben.

Das Ausführungsbeispiel der Erfindung wird anhand der FIGUREN 2 bis 4 erläutert. Es zeigen:
FIGUR 2 ein Meldungsflussdiagramm zur Darstellung der prinzipiellen erfindungsgemäßen Telefonbuchsuche,
FIGUR 3 ein Meldungsflussdiagramm zur Darstellung einer inversen auf einer CLIP-Information basierten Telefonbuchsuche,
FIGUR 4 ein Meldungsflussdiagramm zur Darstellung einer inversen/regulären auf einer manuellen Eingabe basierten Telefonbuchsuche.

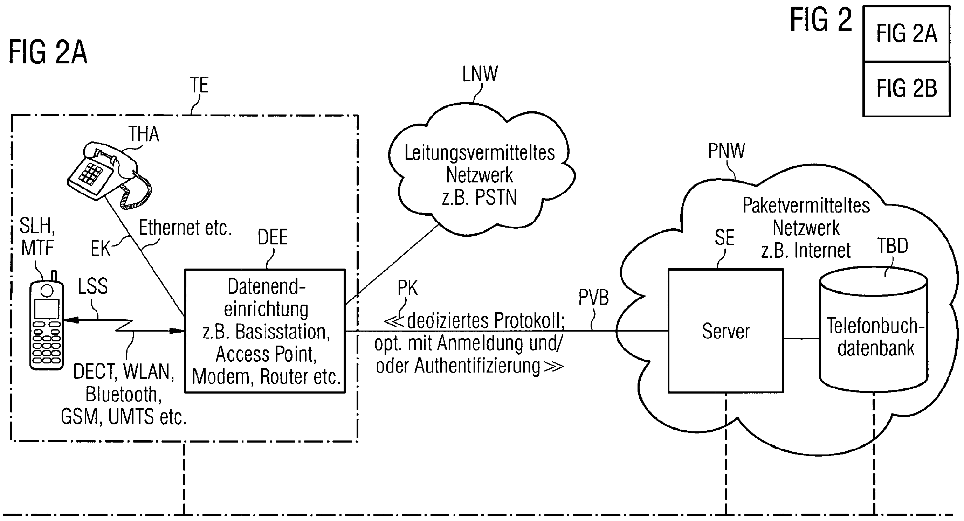

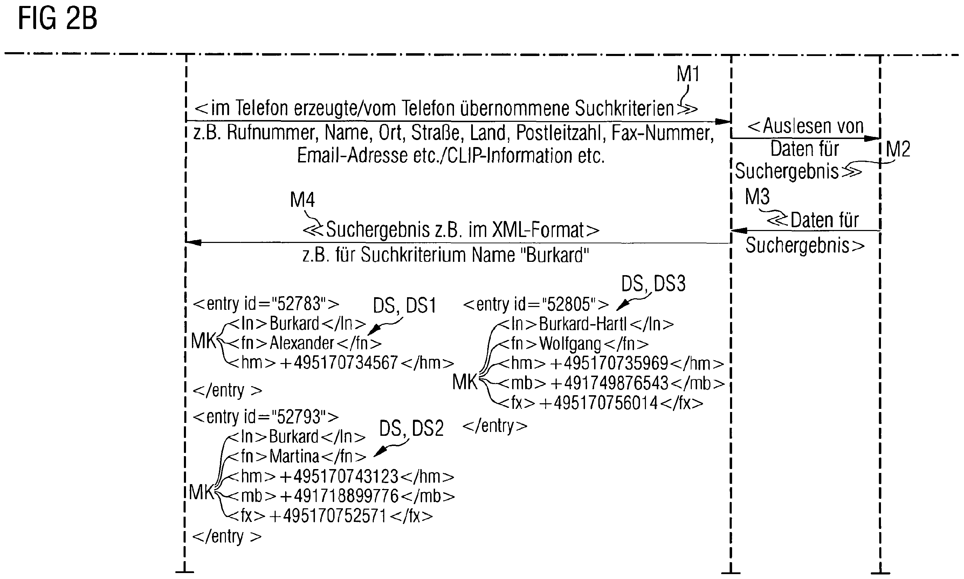

FIGUR 2 zeigt anhand eines Meldungsflussdiagramms (Message Sequence Chart), wie die erfindungsgemäße Telefonbuchsuche prinzipiell durchgeführt wird. Ein für die Telefonbuchsuche verwendetes Telefon TE umfasst z.B. eine Datenübertragungseinrichtung DEE, die über ein ETHERNET-Kabel EK mit einem Telefonhandapparat THA oder über eine "DECT-/WLAN-/Bluetooth-/GSM-/UMTS"-Luftschnittstelle LSS mit einem an die "DECT-/WLAN-/Bluetooth"-Luftschnittstelle LSS adaptierten Schnurlos-Handapparat SLH bzw. mit einem an die "GSM-/UMTS"-Luft-schnittstelle LSS adaptierten Mobiltelefon MTF verbunden ist. Der Telefonhandapparat THA ist z.B. ein analoger Fernsprechapparat, der Schnurlos-Handapparat SLA ist z.B. ein DECT-Mobilteil oder eine WLAN-Mobilteil und die Datenendeinrichtung DEE ist im Fall des Telefonhandapparates THA z.B. ein Router, im Fall des DECT-Mobilteils als Schnurlos-Handapparat SLH z.B. eine DECT-Basisstation und im Fall des WLAN-Mobilteils als Schnurlos-Handapparat SLH z.B. ein WLAN-Access Point.

Das jeweils derart ausgebildete Telefon TE ist durch die Datenendeinrichtung DEE und über eine physikalische Verbindung PVB mit einem Server SE verbunden und hat über diese Verbindung PVB einen Zugriff auf eine dem Server SE zugeordnete Telefonbuchdatenbank TBD. Darüber hinaus ist das Telefon TE durch die durch die Datenendeinrichtung DEE mit einem leitungsvermittelten Netzwerk LNW physikalisch verbunden, das z.B. das "**P**ublic **S**witched Telephone **N**etwork; PSTN" ist. Der Server SE als auch die Telefonbuchdatenbank TBD sind einem paketvermittelten Netzwerk PNW zugeordnet, das z.B. das Internet ist.

Damit das Telefon TE je nach Ausgestaltung auf in der Telefonbuchdatenbank TBD gespeicherte Telebuchdaten zugreifen kann - z.B. im Rahmen einer Telefonbuchsuche, wird für diese Zugriffe ein dediziertes Protokoll PK zwischen dem Telefon TE und dem Server SE verwendet, gemäß dem sich das Telefon TE und der Server SE miteinander unterhalten. Als optionales Feature des Protokolls PK ist eine Anmeldung und/oder Authentifizierung vorgesehen. Das heißt, dass das Telefon TE, wenn es z.B. im Zuge einer Telefonbuchsuche auf den Server SE bzw. die Telefonbuchdatenbank TBD zugreifen möchte, sich zuvor beim Server SE bzw. der Telefonbuchdatenbank TBD anmelden und/oder authentifizieren muss.

Gemäß dem dedizierten Protokoll PK überträgt das Telefon TE mit einer ersten Meldung M1 im Telefon TE erzeugte und/oder vom Telefon übernommene Suchkriterien an den Server SE. Die im Telefon erzeugte Suchkriterien sind für eine inverse Telefonbuchsuche z.B. jeweils die Rufnummer eines zu suchenden Teilnehmers und für eine reguläre Suche z.B. der Name, der Ort, die Straße, das Land, die Postleitzahl, die Fax-Nummer und/oder die Email-Adresse. Das vom Telefon übernommene Suchkriterium ist z.B. eine an das Telefon übermittelte CLIP-Information. Im Anschluss an die übertragenen Suchkriterien wird von dem Server SE mit einer zweiten Meldung M2 an die Telefonbuchdatenbank TBD das Auslesen von zu den Suchkriterien korrespondierenden Daten für ein Suchergebnis aus der Telefonbuchdatenbank TBD initiiert. Mit einer dritten Meldung M3 werden die gefundenen Daten für das Suchergebnis von der Telefonbuchdatenbank TBD zum Server SE übertragen. Der Server SE stellt anschließend die erhaltenen Daten in ein Suchergebnis z.B. im "XML"-Format zusammen und schickt dieses Suchergebnisses in einer vierten Meldung M4 dem Telefon TE.

In der FIGUR 2 ist ein mögliches Suchergebnis infolge der Eingabe des Namens "Burkard" als Suchkriterium (reguläre Telefonbuchsuche) dargestellt. Das dem Telefon TE übermittelte Suchergebnis umfasst beispielsweise drei in der Telefonbuchdatenbank TBD gefundene Datensätze DS, eine ersten Datensatz DS1, einen zweiten Datensatz DS2 und einen dritten Datensatz DS3, die vorzugsweise sequentiell übertragen werden. Die sequentielle Übertragungsweise bietet sich insbesondere dann an, wenn eine größere Datenmenge zu übertragen ist. Jeder dieser Datensätze DS hat eine durch Markierungen MK (engl. tags) des dedizierten Protokolls PK geprägte Datensatzstruktur, die es dem Telefon TE, das die Datensätze empfängt, ermöglicht, die Semantik des Suchergebnisses (der Datensätze) zu verstehen und die einzelnen Daten in dem jeweiligen Datensatz unabhängig voneinander für telefonspezifische Operationen [z.B. abgehender Telefonanruf, Speicherung in ein lokales Telefonbuch, Auflösung von Rufnummerinformationen (CLIP-Informationen; **C**alling **L**ine **I**dentification **P**resentation)] zu nutzen.

Beispiel: Anhand der Markierung "<hm>" MK, die eine Heim-Festnetzrufnummer angibt, kann das Telefon TE, nachdem es das Suchergebnis erhalten hat, unmittelbar oder nach Auswahl/Bestätigung durch den Telefonbenutzer einen Telefonrufanruf zu dem Teilnehmer mit dieser Heim-Festnetzrufnummer absetzen.

Die übrigen verwendeten Markierungen "<ln>", "<fn>", "<mb>", "<fx>" MK geben in der Reihenfolge folgendes an: Nachname, Vorname, Mobiltelefonnummer, Faxnummer. Je nach Anzahl der insgesamt verwendeten Datentypen (z.B. Name, Ort, Straße, Land, Postleitzahl, Fax-Nummer, Email-Adresse etc.) in der Telefonbuchdatenbank und bei der Telefonbuchsuche gibt es auch entsprechende Markierungen. Vorzugsweise enthält das Suchergebnis einen kompletten in der Telefonbuchdatenbank TBD zu dem Suchkriterium gespeicherten Datensatz DS bzw. jeder einzelne Datensatz alle in der Telefonbuchdatenbank TBD zu dem Suchkriterium gespeicherten Daten. Es ist aber auch möglich nur einen Teil der Daten bzw. einen unvollständigen Datensatz zu übertragen.

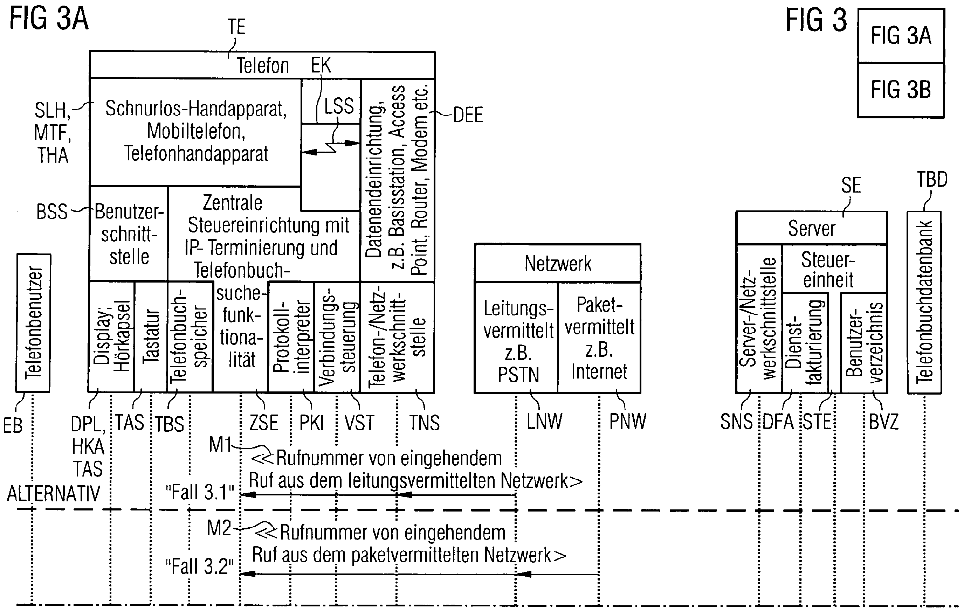

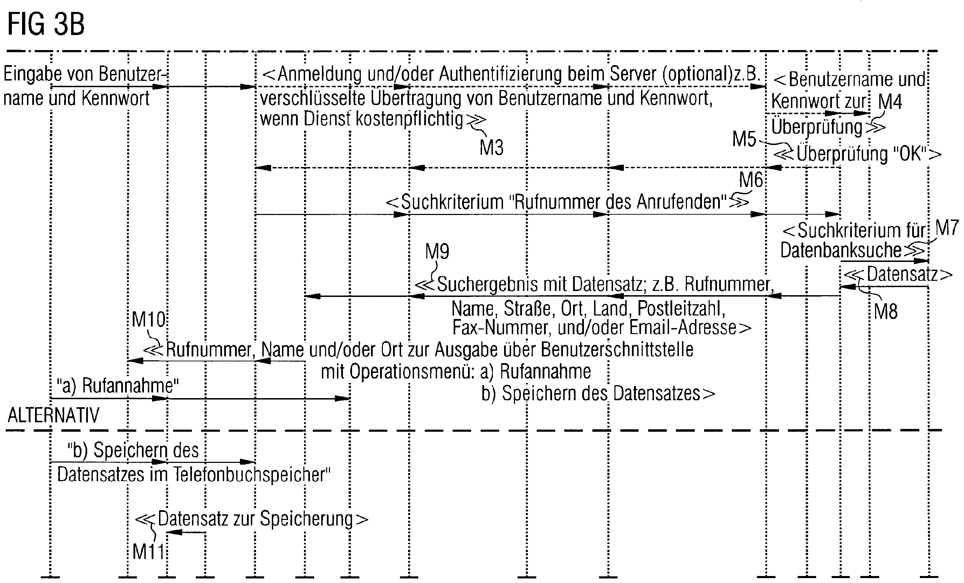

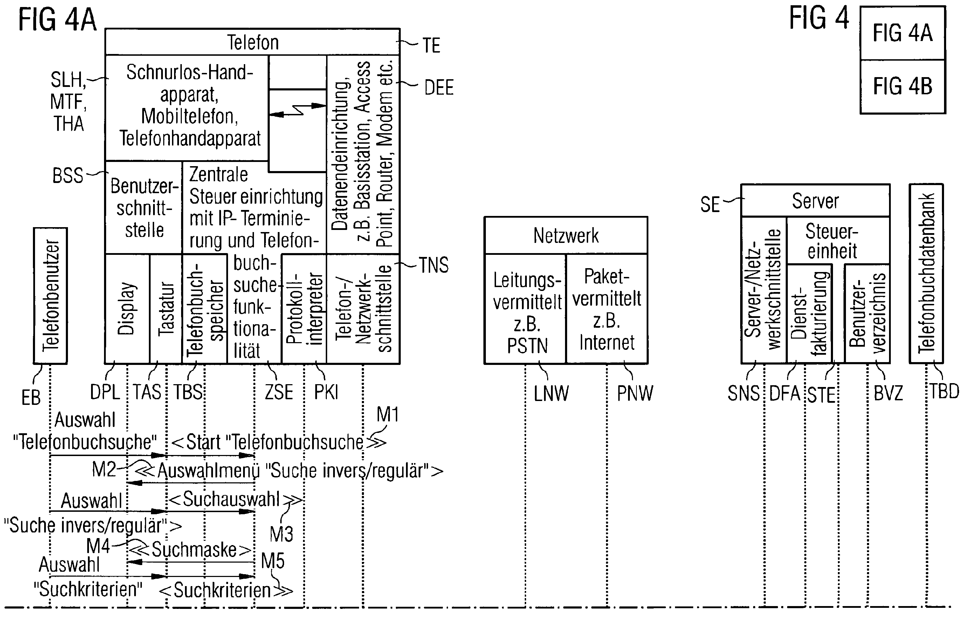

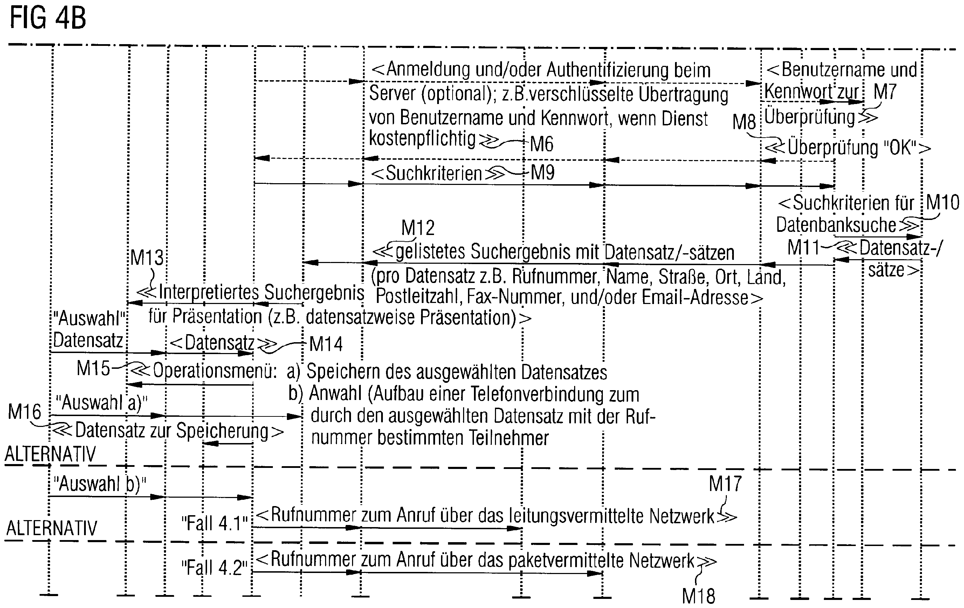

Im Unterschied zum Stand der Technik (FIGUR 1) werden also die Suchergebnisse unmittelbar weiterverwendet bzw. weiterverarbeitet. So kann beispielsweise eine gefundene Rufnummer direkt gewählt oder lokal in einen Telefonbuchspeicher des Telefons gespeichert werden (vgl. FIGUR 4). Darüber hinaus kann einem eingehenden Telefonanruf mit Rufnummerübermittlung (Anruf mit CLIP) direkt ein Name und ggf. Adresse zugeordnet werden, falls die übermittelte Rufnummer nicht im lokalen Telefonbuchspeicher enthalten ist (vgl. FIGUR 3).

Bevor im Weiteren - bei der Beschreibung der FIGUREN 3 und 4 - einzelne ausgewählte Hauptszenarien im Zusammenhang mit der Telefonbuchsuche auf der Basis der Betrachtungen zu der FIGUR 2 erläutert werden, soll bereits an dieser Stelle auf ein paar Nebenaspekte bezüglich dieser Szenarien oder anderer Szenarien bei der Telefonbuchsuche hingewiesen und deren Bedeutung und Auswirkungen für eine verbesserte, effizientere Suche (zusätzliche vorteilhafte Weiterbildungen der Erfindung), ohne die Details hierfür im Einzelnen darzustellen und zu erläutern, kurz beleuchtet werden.
**1.** Wenn bei der Suche in einem Telefonverzeichnis, infolge eines eingegebenen Zeichensatzes "Meier" für einen Namen als Suchkriterium (vollständig eingegebener Zeichensatz), das Suchergebnis eine deutlich größere Anzahl "n" als z.B. n=7 (individuell einstellbarer Grenzwert) Datensätze beinhaltet (z.B. n=50, weil eine derartige Menge auf einem Telefon mit einem gegenüber Computerbildschirmen kleinen Telefondisplay nicht benutzerfreundlich dargestellt und ausgegeben werden kann), dann wird vorzugsweise in dem Server unterstützt durch das dedizierte Protokoll ein sogenanntes "ambiguity handling" durchgeführt, bei dem serverseitig durch das Übertragen weiterer Meldungen an das Telefon versucht wird, den Benutzer z.B. durch das Anbieten von Präzisierungen hinsichtlich des verwendeten Suchkriteriums (z.B. Übermittelung von Vornamen aus der Vielzahl der Datensätze) zu animieren, das Suchkriterium zu ergänzen, um dadurch das Suchergebnis hinsichtlich der Anzahl einzugrenzen bzw. zu reduzieren.
**2.** Wenn bei der Suche in einem Telefonverzeichnis, infolge eines eingegebenen Zeichensatzes "Ham" für einen Ort und eines eingegebenen Zeichensatzes "Barlow" für einen Namen als Suchkriterium (unvollständig eingegebener Ort-Zeichensatz und vollständiger Namen-Zeichensatz), kein Datensatz gefunden werden kann, weil kein eindeutiges Suchkriterium vorliegt, dann wird vorzugsweise in dem Server unterstützt durch das dedizierte Protokoll wieder das "ambiguity handling" durchgeführt, bei dem serverseitig durch das Übertragen weiterer Meldungen an das Telefon versucht wird, den Benutzer z.B. durch das Anbieten von Präzisierungen hinsichtlich des verwendeten Ort-Zeichensatzes (z.B. Übermittelung von in der Datenbank gespeicherten Ortsnamen, die mit dem eingegebenen Zeichensatz beginnen wie z.B. **Ham**burg, **Ham**m, **Ham**melbug, etc.) zu animieren, das Suchkriterium zu optimieren, um dadurch ein Suchergebnis zu erhalten..
**3.** Wenn bei der Suche in einem Branchenverzeichnis, infolge eines eingegebenen Zeichensatzes "Bocholt" für einen Ort, eines eingegebenen Zeichensatzes "Schmidt, Schmitt, Schmid" für einen Namen und eines eingegebenen Zeichensatzes "Arzt" für eine Branche als Suchkriterium (jeweils vollständig eingegebener Zeichensatz), das Suchergebnis eine deutlich größere Anzahl "n" als z.B. n=5 (individuell einstellbarer Grenzwert) Datensätze beinhaltet (z.B. n=25, weil eine derartige Menge auf einem Telefon mit einem gegenüber Computerbildschirmen kleinen Telefondisplay nicht benutzerfreundlich dargestellt und ausgegeben werden kann), dann wird vorzugsweise in dem Server unterstützt durch das dedizierte Protokoll wieder das "ambiguity handling" durchgeführt, bei dem serverseitig durch das Übertragen weiterer Meldungen an das Telefon versucht wird, den Benutzer z.B. durch das Anbieten von Präzisierungen hinsichtlich des verwendeten Branchen-Zeichensatzes (z.B. Übermittelung von in der Datenbank gespeicherten unter der Branche "Arzt" verfügbare Spezial-Branchen, wie z.B. Hausarzt, Zahnarzt, HNO-Arzt, etc.) zu animieren, das Suchkriterium zu ergänzen, um dadurch das Suchergebnis hinsichtlich der Anzahl einzugrenzen bzw. zu reduzieren.

FIGUR 3 zeigt ein Meldungsflussdiagramm (Message Sequence Chart) zur Darstellung einer inversen auf einer CLIP-Information basierten Telefonbuchsuche. Der hierfür notwendige Meldungsfluss verläuft gemäß der FIGUR 3 zwischen einem Telefonbenutzer TBE, der das Telefon TE benutzt, dem Telefon TE, dem leitungsvermitteltem Netzwerk LNW, dem paketvermitteltem Netzwerk PNW, dem Server SE und der Telefonbuchdatenbank TBD.

Die für die Darstellung des Meldungsflusses berücksichtigten Baueinheiten oder Komponenten sind
(**i**) für das Telefon TE mit dem Schnurlos-Handapparat SLH, dem Mobiltelefon MTF oder dem Telefonhandapparat THA, denen jeweils eine Benutzerschnittstelle BSS und eine Zentrale Steuereinrichtung ZSE mit IP-Terminierung und Telefonbuchsuchefunktionalität zugeordnet ist und wobei der Benutzerschnittstelle BSS ein Display DPL, eine Hörkapsel HKA und eine Tastatur TAS und der Zentralen Steuereinrichtung ZSE ein Telefonbuchspeicher TBS, ein Protokollinterpreter PKI und eine Verbindungssteuerung VST zugeordnet sind, sowie mit der Datenendeinrichtung DEE mit einer zugeordneten Telefon-/Netzwerkschnittstelle TNS, die in der dargestellten Weise miteinander verbunden sind und im Sinne der Wirkungsweise eines Telefons eine Funktionseinheit bilden und
(**ii**) für den Server SE mit einer Server-/Netzwerkschnittstelle SNS und einer Steuereinheit STE, der eine Dienst-Fakturierung DFA und ein Benutzerverzeichnis BVZ zugeordnet sind, die in der dargestellten Weise miteinander verbunden sind und im Sinne der Wirkungsweise eines Servers eine Funktionseinheit bilden.

Der dargestellte Meldungsfluss beginnt damit, dass entweder aus dem leitungsvermittelten Netzwerk LNW ("Fall 3.1") oder aus dem paketvermittelten Netzwerk PNW ("Fall 3.2") ein Anruf bei dem Telefon eingeht. Im "Fall 3.1" überträgt das leitungsvermittelte Netzwerk LNW aufgrund der aktivierten CLIP-Funktionalität mit einer ersten Meldung M1 die Rufnummer des eingehenden Rufes (Teilnehmers) über die Telefon-/Netzwerkschnittstelle TNS der Datenendeinrichtung DEE an die Zentrale Steuereinrichtung ZSE des Schnurlos-Handapparats SLH, des Mobiltelefons MTF oder des Telefonhandapparats THA, während im "Fall 3.2" das paketvermittelte Netzwerk PNW wieder aufgrund der aktivierten CLIP-Funktionalität mit einer zweiten Meldung M2 die Rufnummer des eingehenden Rufes (Teilnehmers) über die Telefon-/Netzwerkschnittstelle TNS an die Zentrale Steuereinrichtung ZSE überträgt.

Möchte die Zentrale Steuereinrichtung ZSE des Telefons TE nun mit der mittels CLIP empfangenen Rufnummer des Anrufers eine inverse Telefonbuchsuche durchführen und hierfür auf den Server SE bzw. die Telefonbuchdatenbank TBD zugreifen, so kann es beispielsweise erforderlich sein, dass sich das Telefon TE beim Erstzugriff beim Server SE bzw. der Telefonbuchdatenbank TBD anmeldet oder beim wiederholten Zugriff authentifiziert. Die Zentrale Steuereinrichtung ZSE des Telefons TE sendet also zu diesem Zweck mit einer dritten Meldung M3 über das paketvermittelte Netzwerk PNW einen Benutzernamen und ein Kennwort, das der Benutzer zuvor von dem Betreiber des Servers bzw. der Telefonbuchdatenbank per Post oder Email erhalten und dieser nach Erhalt über die Tastatur TAS eingegeben hat, an der Server SE, wo diese Informationen von der Server-/Netzwerkschnittstelle SNS empfangen werden. Sofern der Dienst "inverse Telefonbuchsuche" nicht kostenlos vom Dienstanbieter zur Verfügung gestellt wird, ist es u.U. zweckmäßig, wenn der Benutzername und das Kennwort mit der dritten Meldung M3 verschlüsselt übertragen werden. Von der Server-/Netzwerkschnittstelle SNS werden der empfangene Benutzername und das Kennwort mit einer vierten Meldung M4 der Steuereinheit STE mit dem zugeordneten Benutzerverzeichnis BVZ zur Überprüfung übergeben. Muss gegebenenfalls (bei kostenpflichtigem Dienst) auch überprüft werden, ob der Dienstnutzer seine Gebühren für die Bereitstellung des Dienstes entrichtet hat, so findet dies in der Dienst-Fakturierung DFA der Steuereinheit STE statt. Sind der empfangene Benutzername und das empfangene Kennwort auch in dem Benutzerverzeichnis BVZ des Servers SE enthalten und gegebenenfalls auch die Gebühren bezahlt (positive Überprüfung), so wird von der Steuereinheit STE mit dem zugeordneten Benutzverzeichnis BVZ und der Dienst-Fakturierung DFA über die Server-/Netzwerkschnittstelle SNS, das paketvermittelte Netzwerk PNW und die Telefon-/Netzwerkschnittstelle TNS des Telefons TE eine fünfte Meldung M5 mit dem Inhalt "Überprüfung OK" an die Zentrale Steuereinrichtung ZSE gesendet. Da der ganze Anmelde- bzw. Authentifizierungsvorgang (Meldungen M3 - M5) - wie bereits bei der Beschreibung der FIGUR 2 erwähnt optional ist, ist dieser Teil des Meldungsflusses in der FIGUR 3 gestrichelt dargestellt.

Nach erfolgreicher Anmeldung bzw. Authentifizierung wird von der Zentralen Steuereinrichtung ZSE mit einer sechsten Meldung M6 als Suchkriterium die Rufnummer des Anrufers/Anrufenden über die Telefon-/Netzwerkschnittstelle TNS, das paketvermittelte Netzwerk PNW an den Server SE geschickt, wo diese von der Server-/Netzwerkschnittstelle SNS empfangen und an die Steuereinheit STE weitergeleitet wird. Danach wird von der Steuereinheit STE das Suchkriterium/die Rufnummer für die Datenbanksuche mit einer siebten Meldung M7 an die Telefonbuchdatenbank TBD übergeben. Als Ergebnis dieser Datenbanksuche liest die Steuereinheit STE mit einer achten Meldung M8 einen Datensatz aus der Telefonbuchdatenbank TBD aus, stellt ein Suchergebnis aus dem Datensatz zusammen und überträgt mit einer neunten Meldung M9 das Suchergebnis mit dem Datensatz über die Server-/Netzwerkschnittstelle SNS, das paketvermittelte Netzwerk PNW und die Telefon-/Netzwerkschnittstelle TNS des Telefons TE an den Protokollinterpreter PKI der Zentralen Steuereinrichtung ZSE. Der Protokollinterpreter PKI interpretiert das empfangene Suchergebnis mit Hilfe der gemäß dem dedizierten Protokoll PK bei der Strukturierung der Daten des Datensatzes (vgl. FIGUR 2) verwendeten Markierungen MK und ist dadurch in der Lage die Semantik der Suchergebnisses zu verstehen. Nach der Interpretation des Suchergebnisses wird von der Zentralen Steuereinrichtung ZSE mit einer zehnten Meldung M10 vorzugsweise die Rufnummer, der Name und/oder der Ort aus dem Datensatzes des Suchergebnisses an die Benutzerschnittstelle BSS weitergeleitet, wo diese entweder über das Display DPL oder über die Hörkapsel HKA, beispielsweise zusammen mit der Rufsignalisierung, ausgegeben werden. Mit der Ausgabe der Rufnummer, des Namens und/oder des Ortes wird dem Telefonbenutzer TEB vorzugsweise auch ein Operationsmenü angeboten gemäß dem dieser entweder den eingehenden Ruf annehmen kann ["Option a)"] oder den Datensatz des Suchergebnisses in dem Telefonbuchdatenspeicher TBS speichern kann ["Option b)"]. Bei der "Option a)" wird von dem Telefonbenutzer TEB über die Tastatur TAS eine Taste "Rufannahme" betätigt und daraufhin der Ruf von der Verbindungssteuerung VST angenommen. Bei der "Option b)" wird von dem Telefonbenutzer TEB über die Tastatur TAS eine Taste zur Speicherung des Datensatzes im Telefonbuchdatenspeicher TBS betätigt, wodurch die Zentrale Steuereinrichtung ZSE gemäß einer elften Meldung M11 den Datensatz in dem Telefonbuchdatenspeicher TBS speichert.

FIGUR 4 zeigt ein Meldungsflussdiagramm (Message Sequence Chart) zur Darstellung einer inversen/regulären auf einer manuellen Eingabe basierten Telefonbuchsuche. Der hierfür notwendige Meldungsfluss verläuft gemäß der FIGUR 4 wieder zwischen dem Telefonbenutzer TBE, der das Telefon TE benutzt, dem Telefon TE, dem leitungsvermitteltem Netzwerk LNW, dem paketvermitteltem Netzwerk PNW, dem Server SE und der Telefonbuchdatenbank TBD.

Die für die Darstellung des Meldungsflusses berücksichtigten Baueinheiten oder Komponenten sind
(**i**) für das Telefon TE mit dem Schnurlos-Handapparat SLH, dem Mobiltelefon MTF oder dem Telefonhandapparat THA, denen jeweils wieder die Benutzerschnittstelle BSS und die Zentrale Steuereinrichtung ZSE mit der IP-Terminierung und Telefonbuchsuchefunktionalität zugeordnet ist und wobei der Benutzerschnittstelle BSS wieder das Display DPL, die Hörkapsel HKA und die Tastatur TAS und der Zentralen Steuereinrichtung ZSE der Telefonbuchspeicher TBS und der Protokollinterpreter PKI zugeordnet sind, sowie mit der Datenendeinrichtung DEE mit der zugeordneten Telefon-/Netzwerkschnittstelle TNS, die wieder in der dargestellten Weise miteinander verbunden sind und im Sinne der Wirkungsweise eines Telefons eine Funktionseinheit bilden und
(**ii**) für den Server SE mit der Server-/Netzwerkschnittstelle SNS und der Steuereinheit STE, der wieder die Dienst-Fakturierung DFA und das Benutzerverzeichnis BVZ zugeordnet sind, die wieder in der dargestellten Weise miteinander verbunden sind und im Sinne der Wirkungsweise eines Servers eine Funktionseinheit bilden.

Der dargestellte Meldungsfluss beginnt damit, dass vom Telefonbenutzer TEB auf der Tastatur TAS das Leistungsmerkmal "Telefonbuchsuche" ausgewählt wird. Im Anschluss daran wird mit einer ersten Meldung M1 die Telefonbuchsuche durch die Zentrale Steuereinrichtung ZSE gestartet. Infolge hiervon überträgt die Zentrale Steuereinrichtung ZSE mit einer zweiten Meldung M2 ein Auswahlmenü "Suche invers/regulär" an das Display DPL der Benutzerschnittstelle BSS. Der Telefonbenutzer TEB trifft danach über die Tastatur TAS eine Auswahl "Suche invers/regulär" und die getroffene Suchauswahl wird mit einer dritten Meldung M3 der Zentralen Steuereinrichtung ZSE mitgeteilt. Daraufhin überträgt die Zentrale Steuereinrichtung ZSE mit einer vierten Meldung M4 eine Suchmaske an das Display DPL der Benutzerschnittstelle BSS. Der Telefonbenutzer TEB trägt über die Tastatur TAS in die Suchmaske Suchkriterien ein, die mit einer fünften Meldung M5 der Zentralen Steuereinrichtung ZSE mitgeteilt werden.

Möchte die Zentrale Steuereinrichtung ZSE des Telefons TE nun mit den vom Telefonbenutzer TEB eingegebenen Suchkriterien eine inverse/reguläre Telefonbuchsuche durchführen und hierfür auf den Server SE bzw. die Telefonbuchdatenbank TBD zugreifen, so kann es beispielsweise wieder erforderlich sein, dass sich das Telefon TE beim Erstzugriff beim Server SE bzw. der Telefonbuchdatenbank TBD anmeldet oder beim wiederholten Zugriff authentifiziert. Die Zentrale Steuereinrichtung ZSE des Telefons TE sendet also zu diesem Zweck mit einer sechsten Meldung M6 über das paketvermittelte Netzwerk PNW einen Benutzernamen und ein Kennwort, das der Benutzer zuvor von dem Betreiber des Servers bzw. der Telefonbuchdatenbank per Post oder Email erhalten und dieser nach Erhalt über die Tastatur TAS eingegeben hat, an der Server SE, wo diese Informationen von der Server-/Netzwerkschnittstelle SNS empfangen werden. Sofern der Dienst "inverse/reguläre Telefonbuchsuche" nicht kostenlos vom Dienstanbieter zur Verfügung gestellt wird, ist es u.U. zweckmäßig, wenn der Benutzername und das Kennwort mit der sechsten Meldung M6 verschlüsselt übertragen werden. Von der Server-/Netzwerkschnittstelle SNS werden der empfangene Benutzername und das Kennwort mit einer siebten Meldung M7 der Steuereinheit STE mit dem zugeordneten Benutzerverzeichnis BVZ zur Überprüfung übergeben. Muss gegebenenfalls (bei kostenpflichtigem Dienst) auch überprüft werden, ob der Dienstnutzer seine Gebühren für die Bereitstellung des Dienstes entrichtet hat, so findet dies in der Dienst-Fakturierung DFA der Steuereinheit STE statt. Sind der empfangene Benutzername und das empfangene Kennwort auch in dem Benutzerverzeichnis BVZ des Servers SE enthalten und gegebenenfalls auch die Gebühren bezahlt (positive Überprüfung), so wird von der Steuereinheit STE mit dem zugeordneten Benutzverzeichnis BVZ und der Dienst-Fakturierung DFA über die Server-/Netzwerkschnittstelle SNS, das paketvermittelte Netzwerk PNW und die Telefon-/Netzwerkschnittstelle TNS des Telefons TE eine achte Meldung M8 mit dem Inhalt "Überprüfung OK" an die Zentrale Steuereinrichtung ZSE gesendet. Da der ganze Anmelde- bzw. Authentifizierungsvorgang (Meldungen M6 - M8) - wie bereits bei der Beschreibung der FIGUR 2 erwähnt optional ist, ist dieser Teil des Meldungsflusses in der FIGUR 4 wieder gestrichelt dargestellt.

Nach erfolgreicher Anmeldung bzw. Authentifizierung wird von der Zentralen Steuereinrichtung ZSE mit einer neunten Meldung M9 die vom Telefonbenutzer TEB gemäß den Meldungen M1...M5 eingegebenen Suchkriterium über die Telefon-/Netzwerkschnittstelle TNS, das paketvermittelte Netzwerk PNW an den Server SE geschickt, wo diese von der Server-/Netzwerkschnittstelle SNS empfangen und an die Steuereinheit STE weitergeleitet werden. Danach werden die Suchkriterien von der Steuereinheit STE für die Datenbanksuche mit einer zehnten Meldung M10 an die Telefonbuchdatenbank TBD übergeben. Als Ergebnis dieser Datenbanksuche liest die Steuereinheit STE mit einer elften Meldung M11 mindestens einen Datensatz aus der Telefonbuchdatenbank TBD aus, stellt ein Suchergebnis aus dem Datensatz/- den Datensätzen zusammen und überträgt mit einer zwölften Meldung M12 das Suchergebnis mit dem Datensatz/den Datensätzen, z.B. in Form einer Liste, über die Server-/Netzwerkschnittstelle SNS, das paketvermittelte Netzwerk PNW und die Telefon-/Netzwerkschnittstelle TNS des Telefons TE an den Protokollinterpreter PKI der Zentralen Steuereinrichtung ZSE. Der Protokollinterpreter PKI interpretiert das empfangene Suchergebnis mit Hilfe der gemäß dem dedizierten Protokoll PK bei der Strukturierung der Daten des Datensatzes (vgl. FIGUR 2) verwendeten Markierungen MK und ist dadurch in der Lage die Semantik der Suchergebnisses zu verstehen. Nach der Interpretation des Suchergebnisses wird von der Zentralen Steuereinrichtung ZSE mit einer dreizehnten Meldung M13 zur Präsentation des Datensatzes/der Datensätze, die vorzugsweise datensatzweise erfolgt, der Datensatz bzw. die Datensätze des Suchergebnisses an die Benutzerschnittstelle BSS weitergeleitet, wo diese vorzugsweise über das Display DPL ausgegeben werden. Es ist aber auch möglich, dass die Ausgabe über die Hörkapsel HKA ausgegeben wird.

Der Telefonbenutzer TEB trifft danach über die Tastatur TAS eine Datensatzauswahl und der ausgewählte Datensatz wird mit einer vierzehnten Meldung M14 der Zentralen Steuereinrichtung ZSE mitgeteilt. Daraufhin überträgt die Zentrale Steuereinrichtung ZSE mit einer fünfzehnten Meldung M15 ein Operationsmenü an das Display DPL der Benutzerschnittstelle BSS, das dort ausgegeben wird und mit dem dem Telefonbenutzer TEB angeboten wird entweder den ausgewählten Datensatz zu speichern ["Option a)"] oder eine Anwahl durchzuführen, bei der eine Telefonverbindung zum durch den ausgewählten Datensatz mit der korrespondierenden Rufnummer bestimmten Teilnehmer aufgebaut wird ["Option b)"]. Bei der "Option a)" wird von dem Telefonbenutzer TEB über die Tastatur TAS eine Taste zur Speicherung des Datensatzes im Telefonbuchdatenspeicher TBS betätigt, wodurch die Zentrale Steuereinrichtung ZSE gemäß einer sechzehnten Meldung M16 den Datensatz in dem Telefonbuchdatenspeicher TBS speichert. Bei der "Option b)" wird von dem Telefonbenutzer TEB über die Tastatur TAS eine Wahltaste betätigt und daraufhin von der Zentralen Steuereinrichtung ZSE die zu dem ausgewählten Datensatz korrespondierende Rufnummer über die Telefon-/Netzwerkschnittstelle TNS entweder mit einer siebzehnten Meldung M17 an das leitungsvermittelte Netzwerk LNW ("Fall 4.1") oder mit einer achtzehnten Meldung M18 an das paketvermittelte Netzwerk PNW ("Fall 4.2") übertragen.

## Patentansprüche

1. Verfahren zur Nutzung von in einer Telefonbuchdatenbank (TBD) eines Servers (SE) in Datensätzen (DS, DS1, DS2, DS3) gespeicherten Telefonbuchdaten durch ein Telefon (TE) mit folgenden Verfahrensschritten:
a) Das mit einem paketvermittelten Netzwerk (PNW) und/oder mit einem leitungsvermittelten Netzwerk (LNW) verbundene Telefon (TE) wird über den Server (SE) mit der Telefonbuchdatenbank (TBD) physikalisch verbunden,
b) das Telefon (TE) intitiiert durch ein den Zugriff auf die Telefonbuchdatenbank anstoßendes erstes Ereignis (FIG 3), eingehender Telefonanruf mit Rufhummerübermittlung, eine bezüglich des Suchergebnisses gezielte Telefonbuchsuche und/oder durch ein den Zugriff auf die Telefonbuchdatenbank (TBD) anstoßendes zweites Ereignis (FIG 4), Menüaufruf "Telefonbuchsuche" durch einen Telefonbenutzer (TEB), eine bezüglich des Suchergebnisses gezielte offene Telefonbuchsuche in der Telefonbuchdatenbank (TBD),
c) mit dem Start der Telefonbuchsuche baut das Telefon (TE) eine logische Verbindung zu dem Server (SE) mit der Telefonbuchdatenbank (TBD) auf und überträgt gemäß einem dedizierten Protokoll (PK) unmittelbar oder mittelbar nach Anmeldung oder Authentifizierung bei dem Server (SE) respektive bei der Telefonbuchdatenbank (TBD) mindestens ein Suchkriterium für die Telefonbuchsuche an den Server (SE),
d) der Server (SE) führt gegebenenfalls nach Bestätigung der Anmeldung oder Überprüfung der Authentifizierung anhand des Suchkriteriums/der Suchkriterien die Suche in der Telefonbuchdatenbank (TBD) durch und überträgt gemäß dem Protokoll (PK) das Suchergebnis an das Telefon (TE), wobei das Suchergebnis in der Telefonbuchdatenbank gespeicherte Datensätze umfasst, wobei jeder dieser Datensätze eine durch Markierungen (MK) des dedizierten Protokolls (PK) geprägte Datensatzstruktur hat, wobei die Markierungen den jeweiligen Datentyp der im Datensatz enthaltenen Daten angeben, wie beispielsweise Nachname, Vorname, Ort, Straße, Land, Postleitzahl, Fax-Nummer, Branche, Spezialbranche, Email-Adresse oder Rufnummer, womit das Telefon in der Lage ist, die Semantik des Suchergebnisses zu verstehen und somit die einzelnen Daten in dem jeweiligen Datensatz unabhängig voneinander für telefonspezifische Operationen, wie beispielswiese einen abgehenden Telefonanruf oder Calling Line Identification Presentation, nutzt; wobei ein DECT-Mobilteil (SLH) eines DECT-Telefons mit einer an das paketvermittelte Netzwerk (PNW) und/oder das leitungsvermittelte Netzwerk (LNW) angeschlossenen DECT-Basisstation (DEE) als das Telefon (TE) oder ein WLAN-Mobilteil (SLH) eines WLAN-Telefons mit einem an das paketvermittelte Netzwerk (PNW) und/oder das leitungsvermittelte Netzwerk (LNW) angeschlossenen "WLAN-Access Point" (DEE) als das Telefon (TE) oder ein Telefonhandapparat (THA), der über ein ETHERNET-Kabel (EK) mit einem an das paketvermittelte Netzwerk (PNW) und/oder das leitungsvermittelte Netzwerk (LNW) angeschlossenen "Router" (DEE) verbunden ist, als das Telefon (TE) benutzt wird,
e) auf einem Telefondisplay (DPL) des DECT-Mobilteils (SLH), des WLAN-Mobilteils (SLH) oder des Telefonhandapparats (THA) wird das Suchergebnis dargestellt

2. Verfahren nach Anspruch 1, ***dadurch gekennzeichnet, dass*** das Suchergebnis einen kompletten in der Telefonbuchdatenbank (TBD) zu dem Suchkriterium gespeicherten Datensatz (DS) beinhaltet.

3. Verfahren nach Anspruch 1 oder 2, ***dadurch gekennzeichnet, dass*** bei der durch das erste Ereignis (FIG 3) initiierten gezielten Telefonbuchsuche das zu dem Suchkriterium gefundene Suchergebnis für den Telefonbenutzer (TEB) ausgegeben und/oder in einen lokalen Telefonbuchspeicher (TBS) des Telefons (TE) gespeichert wird.

4. Verfahren nach Anspruch 3, ***dadurch gekennzeichnet, dass*** das zu dem Suchkriterium gefundene Suchergebnis zumindest teilweise, insbesondere den Namen und die Rufnummer oder den Namen und den Ort des gefundenen Teilnehmers umfassend, mit der Rufsignalisierung ausgegeben wird.

5. Verfahren nach einem der Ansprüche 1 bis 4, ***dadurch gekennzeichnet, dass*** bei der durch das zweite Ereignis (FIG 4) initiierten gezielten offenen Telefonbuchsuche und
i) bei einem einzigen zu dem Suchkriterium gefundenen Datensatz (DS) dieser Datensatz (DS) für den Telefonbenutzer (TEB) ausgegeben, in einen lokalen Telefonbuchspeicher (TBS) des Telefons (TE) gespeichert und/oder unmittelbar für einen abgehenden Telefonanruf an einen zu dem gefundenen Datensatz (DS) korrespondierenden fernen Teilnehmer benutzt wird oder
ii) bei mehreren zu dem Suchkriterium gefundenen Datensätzen (DS1, DS2, DS3) diese für den Telefonbenutzer (TEB) ausgegeben werden und aus den ausgegebenen Datensätzen (DS1, DS2, DS3) ein Datensatz (DS) ausgewählt und dieser ausgewählte Datensatz (DS) entweder in einen lokalen Telefonbuchspeicher (TBS) des Telefons (TE) gespeichert oder unmittelbar für einen abgehenden Telefonanruf an einen zu dem ausgewählten Datensatz (DS) korrespondierenden fernen Teilnehmer benutzt wird.

6. Verfahren nach Anspruch 5, ***dadurch gekennzeichnet, dass*** die gezielte offene Telefonbuchsuche regulär durchgeführt wird, indem als Suchkriterium Name und Adresse eines in der Telefonbuchdatenbank (TBD) gelisteten Telefonteilnehmers benutzt wird und das Suchergebnis einen kompletten in der Telefonbuchdatenbank (TBD) zu dem Suchkriterium gespeicherten Datensatz (DS) beinhaltet.

7. Verfahren nach Anspruch 6, ***dadurch gekennzeichnet, dass*** die Telefonbuchsuche invers durchgeführt wird, indem als Suchkriterium die Telefonnummer eines in der Telefonbuchdatenbank (TBD) gelisteten Telefonteilnehmers benutzt wird und das Suchergebnis einen kompletten in der Telefonbuchdatenbank (TBD) zu dem Suchkriterium gespeicherten Datensatz (DS) beinhaltet.

8. Verfahren nach einem oder mehreren der Ansprüche 1 bis 7, ***dadurch gekennzeichnet, dass*** das Suchergebnis bei einer größeren zu übertragenden Datenmenge sequentiell übertragen wird.

9. Verfahren nach Anspruch 1, ***dadurch gekennzeichnet, dass*** die Anmeldung und die Authentifizierung durch die Übertragung eines Benutzernamens und eines Kennwortes zu dem Server (SE) erfolgt.

10. Telefon (TE) zur Nutzung von in einer Telefonbuchdatenbank (TBD) eines Servers (SE) in Datensätzen gespeicherten Telefonbuchdaten mit folgenden Merkmalen:
a) Eine Telefon-/Netzwerkschnittstelle (TNS), über die das Telefon (TE) mit einem paketvermittelten Netzwerk (PNW) und/oder mit einem leitungsvermittelten Netzwerk (LNW) sowie via dieses Netzwerkes (PNW) mit dem Server (SE) und der Telefonbuchdatenbank (TBD) physikalisch verbunden ist,
b) eine Benutzerschnittstelle (BSS), eine Zentrale Steuerungseinrichtung (ZSE) mit einem Telefonbuchspeicher (TBS) und einem Protokollinterpeter (PKI) sowie die Telefon-/Netzwerkschnittstelle (TNS) sind derart ausgebildet und die Zentrale Steuerungseinrichtung (ZSE) ist mit der Benutzerschnittstelle (BSS) und der Telefon-/Netzwerkschnittstelle (TNS) derart verbunden, dass
b1) durch ein den Zugriff auf die Telefonbuchdatenbank (TBD) anstoßendes erstes Ereignis (FIG 3), eingehender Telefonanruf mit Rufnummerübermittlung, eine bezüglich des Suchergebnisses gezielte Telefonbuchsuche und/oder durch ein den Zugriff auf die Telefonbuchdatenbank (TBDE) anstoßendes zweites Ereignis (FIG 4), Menüaufruf "Telefonbuchsuche" durch einen Telefonbenutzer (TEB), eine bezüglich des Suchergebnisses gezielte offene Telefonbuchsuche in der Telefonbuchdatenbank (TBD) initiiert wird,
b2) mit dem Start der Telefonbuchsuche eine logische Verbindung zu dem Server (SE) mit der Telefonbuchdatenbank (TBD) aufgebaut und unmittelbar oder mittelbar nach Anmeldung oder Authentifizierung bei dem Server (SE) respektive bei der Telefonbuchdatenbank (TBD) mindestens ein Suchkriterium für die Telefonbuchsuche an den Server (SE) gemäß einem dedizierten Protokoll (PK) übertragen wird,
b3) das von dem Server (SE) infolge der gegebenenfalls nach Bestätigung der Anmeldung oder Überprüfung der Authentifizierung anhand des Suchkriteriums/der Suchkriterien durchgeführten Suche in der Telefonbuchdatenbank (TBD) und gemäß dem Protokoll (PK) übertragene Suchergebnis durch die Telefon-/Netzwerkschnittstelle (TNS) empfangen, an die Zentrale Steuerungseinrichtung (ZSE) weitergeleitet, von dem Protokollinterpreter (PKI) aufgrund von Markierungen (MK) in dem Protokoll (PK) bezüglich dessen Semantik interpretiert und somit direkt für telefonspezifische Operationen genutzt wird; wobei das Telefon ein DECT-Mobilteil (SLH) eines DECT-Telefons mit einer an das paketvermittelte Netzwerk (PNW) und/oder das leitungsvermittelte Netzwerk (LNW) angeschlossenen DECT-Basisstation (DEE), oder ein WLAN-Mobilteil (SLH) eines WLAN-Telefons mit einem an das paketvermittelte Netzwerk (PNW) und/oder das leitungsvermittelte Netzwerk (LNW) angeschlossenen "WLAN-Access Point" (DEE), oder ein Telefonhandhandapparat (THA), der über ein ETHERNET-Kabel (EK) mit einem an das paketvermittelte Netzwerk (PNW) und/oder das leitungsvermittelte Netzwerk (LNW) angeschlossenen "Router" (DEE) verbunden ist, ist;
wobei das DECT-Mobilteil (SLH), das WLAN-Mobilteil (SLH) oder der Telefonhandapparat (THA) ein Telefondisplay (DPL) aufweist,
auf dem das Suchergebnis dargestellt wird; wobei jeder der Datensätze eine durch Markierungen (MK) des dedizierten Protokolls (PK) geprägte Datensatzstruktur hat, so dass das Telefon (TE) die einzelnen Daten in dem jeweiligen Datensatz unabhängig voneinander nutzt und wobei als Suchkriterium für die Telefonbuchsuche ein Datentyp verwendet wird, wobei der als Suchkriterium für die Telefonbuchsuche verwendete Datentyp optional Nachname, Vorname, Ort, Straße, Land, Postleitzahl, Fax-Nummer, Branche, Spezialbranche Email-Adresse oder Rufnummer ist.

11. Telefon (TE) nach Anspruch 10, ***dadurch gekennzeichnet, dass*** das Suchergebnis einen kompletten in der Telefonbuchdatenbank (TBD) zu dem Suchkriterium gespeicherten Datensatz (DS) beinhaltet.

12. Telefon (TE) nach Anspruch 10 oder 11, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass bei der durch das erste Ereignis (FIG 3) initiierten gezielten Telefonbuchsuche das zu dem Suchkriterium gefundene Suchergebnis für den Telefonbenutzer (TEB) ausgegeben und/oder in den lokalen Telefonbuchspeicher (TBS) des Telefons (TE) gespeichert wird.

13. Telefon (TE) nach Anspruch 12, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass das zu dem Suchkriterium gefundene Suchergebnis zumindest teilweise, insbesondere den Namen und die Rufnummer oder den Namen und den Ort des gefundenen Teilnehmers umfassend, mit der Rufsignalisierung ausgegeben wird.

14. Telefon (TE) nach einem der Ansprüche 10 bis 13, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass bei der durch das zweite Ereignis (FIG 4) initiierten gezielten offenen Telefonbuchsuche und
i) bei einem einzigen zu dem Suchkriterium gefundenen Datensatz (DS) dieser Datensatz (DS) für den Telefonbenutzer (TEB) ausgegeben, in einen lokalen Telefonbuchspeicher (TBS) des Telefons (TE) gespeichert und/oder unmittelbar für einen abgehenden Telefonanruf an einen zu dem gefundenen Datensatz (DS) korrespondierenden fernen Teilnehmer benutzt wird oder
ii) bei mehreren zu dem Suchkriterium gefundenen Datensätzen (DS1, DS2, DS3) diese für den Telefonbenutzer (TEB) ausgegeben werden und aus den ausgegebenen Datensätzen (DS1, DS2, DS3) ein Datensatz (DS) ausgewählt und dieser ausgewählte Datensatz (DS) entweder in einen lokalen Telefonbuchspeicher (TBS) des Telefons (TE) gespeichert oder unmittelbar für einen abgehenden Telefonanruf an einen zu dem ausgewählten Datensatz (DS) korrespondierenden fernen Teilnehmer benutzt wird.

15. Telefon (TE) nach Anspruch 14, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/ Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass die gezielte offene Telefonbuchsuche regulär durchgeführt wird, indem als Suchkriterium Name und Adresse eines in der Telefonbuchdatenbank (TBD) gelisteten Telefonteilnehmers benutzt wird und das Suchergebnis einen kompletten in der Telefonbuchdatenbank (TBD) zu dem Suchkriterium gespeicherten Datensatz (DS) beinhaltet.

16. Telefon (TE) nach Anspruch 14, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass die Telefonbuchsuche invers durchgeführt wird, indem als Suchkriterium die Telefonnummer eines in der Telefonbuchdatenbank (TBD) gelisteten Telefonteilnehmers benutzt wird und das Suchergebnis einen kompletten in der Telefonbuchdatenbank (TBD) zu dem Suchkriterium gespeicherten Datensatz (DS) beinhaltet.

17. Telefon (TE) nach einem der Ansprüche 10 bis 16, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass das von dem Server bei einer größeren zu übertragenden Datenmenge sequentiell gesendete Suchergebnis sequentiell bearbeitet wird.

18. Telefon (TE) nach Anspruch 10, ***dadurch gekennzeichnet, dass*** die Benutzerschnittstelle (BSS), die Zentrale Steuerungseinrichtung (ZSE) mit dem Telefonbuchspeicher (TBS) und dem Protokollinterpreter (PKI) sowie die Telefon-/Netzwerkschnittstelle (TNS) derart ausgebildet sind und die Zentrale Steuerungseinrichtung (ZSE) mit der Benutzerschnittstelle (BSS) und der Telefon-/Netzwerkschnittstelle (TNS) derart verbunden ist, dass die Anmeldung und die Authentifizierung durch die Übertragung eines Benutzernamens und eines Kennwortes zu dem Server (SE) erfolgt.

## Claims

1. A method for using telephone book data stored in data sets (DS, DS1, DS2, DS3) in a telephone book database (TBD) of a server (SE) by a telephone (TE) comprising the following steps:
(a) the telephone (TE) connected to a packet-switched network (PNW) and/or to a circuit-switched network (LNW) is physically connected to the telephone book database (TBD) via the server (SE);
(b) the telephone (TE) initiates by means of a first event (Fig. 3), incoming telephone call with call number transmission, which triggers the access to the telephone book database, a targeted telephone book search with respect to the search result and/or by means of a second event (Fig. 4), menu call "telephone book search" by a telephone user (TEB), which triggers the access to the telephone book database (TBD), an open telephone book search in the telephone book database (TBD) with respect to the search result;
(c) with the start of the telephone book search the telephone (TE) establishes a logical connection to the server (SE) comprising the telephone book database (TBD) and transmits according to a dedicated protocol (PK) directly or indirectly after login or authentication at the server (SE) or at the telephone book database (TBD) at least one search criterion for the telephone book search to the server (SE);
(d) the server (SE) after confirmation of the login or verification of the authentication optionally carries out the search in the telephone book database (TBD) based on the search criterion/search criteria and transmits the search result to the telephone (TE) according to the protocol (PK), wherein the search result includes data sets stored in the telephone book database, wherein each of these data sets has a data set structure (MK) specified by marks (MK) of the dedicated protocol (PK), wherein the marks indicate the respective data type of the data included in the data set, such as last name, first name, location, street, country, postal code, fax number, industry, special branch, email address or call number, such that the telephone is able to understand the semantics of the search result and thus uses the individual data in the respective data set independently from each other for telephone-specific operations, such as an outgoing telephone call or Calling Line Identification Presentation,
wherein a DECT handset (SLH) of a DECT telephone comprising a DECT base station (DTE) which is connected to the packet-switched network (PNW) and/or the circuit-switched network (LNW) is used as the telephone (TE), or a WLAN handset (SLH) of a WLAN telephone with a "WLAN access point" (DEE) which is connected to the packet-switched network (PNW) and/or the circuit-switched network (LNW) is used as the telephone (TE), or a telephone handset (THA) which is connected to a "router" (DEE) which is connected to the packet-switched network (PNW) and/or the circuit-switched network (LNW) is used as the telephone (TE); and
(e) the search result is displayed on a telephone display (DPL) of the DECT handset (SLH), the WLAN handset (SLH) or the telephone handset (THA).

2. The method of claim 1, **characterized in that** the search result includes a complete data set (DS) stored in the telephone book database (TBD) with respect to the search criterion.

3. The method of claim 1 or 2, **characterized in that** in the targeted telephone book search initiated by the first event (Fig. 3) the search result found with respect to the search criterion is output to the telephone user (TEB) and/or is stored in a local telephone book memory (TBS) of the telephone (TE).

4. The method of claim 3, **characterized in that** the search result found with respect to the search criterion is at least partially, in particular comprising the name and the call number or the name and the location of the found subscriber, output with the call signaling.

5. The method of any of claims 1 to 4, **characterized in that** in the targeted open directory search initiated by the second event (Fig. 4) and
(i) in the case of a single data set (DS) found with respect to the search criterion this data set (DS) is output to the telephone user (TEB), is stored in a local telephone book memory (TBS) of the telephone (TE) and/or is directly used for an outgoing telephone call to a remote subscriber corresponding to the found data set (DS); or
(ii) in the case of several data sets (DS1, DS2, DS3) found with respect to the search criterion, these are output to the telephone user (TEB), and one data set (DS) is selected out of the output data sets (DS1, DS2, DS3) and this selected data set (DS) is either stored in a local telephone book memory (TBS) of the telephone (TE) or is directly used for an outgoing telephone call to a remote subscriber corresponding to the selected data set (DS).

6. The method of claim 5, **characterized in that** the targeted open directory search is carried out regularly by using the name and address of a telephone subscriber listed in the telephone book database (TBD) as the search criterion, and the search result includes a complete data set (DS) stored in the telephone book database (TBD) with respect to the search criterion.

7. The method of claim 6, **characterized in that** the telephone book search is carried out inversely by using the telephone number of a telephone subscriber listed in the telephone book database (TBD) as the search criterion, and the search result includes a complete data set (DS) stored in the telephone book database (TBD) with respect to the search criterion.

8. The method of one or more of claims 1 to 7, **characterized in that** the search result is transmitted sequentially in case of a larger amount of data to be transmitted.

9. The method of claim 1, **characterized in that** the login and the authentication are implemented by transmitting a user name and a password to the server (SE).

10. A telephone (TE) for use of telephone book data stored in data sets in a telephone book database (TBD) of a server (SE), comprising the following features:
(a) a telephone/network interface (TNS) via which the telephone (TE) is connected to a packet-switched network (PNW) and/or to a circuit-switched network (LNW) and physically connected to the server (SE) and the telephone book database (TBD) via this network (PNW);
(b) a user interface (BSS), a central control device (ZSE) comprising a telephone book memory (TBS) and a protocol interpreter (PKI) as well as the telephone/network interface (TNS) are configured such and the central control device (ZSE) is connected to the user interface (BSS) and the telephone/network interface (TNS) such that
(b1) by means of a first event (Fig. 3), incoming telephone call with call number transmission, which triggers the access to the telephone book database (TBD) a targeted phone book search with respect to the search result, and/or by means of a second event (Fig. 4), menu call "telephone book search" by a telephone user (TEB), which triggers the access to the telephone book database (TBDE), a targeted open telephone book search in the phone book database (TBD) with respect to the search result is initiated;
(b2) with the start of the telephone book search a logical connection to the server (SE) comprising the telephone book database (TBD) is established and directly or indirectly after login or authentication at the server (SE) or at the telephone book database (TBD) at least one search criterion for the telephone book search is transmitted to the server (SE) according to a dedicated protocol (PK);
(b3) the search result transmitted by the server (SE) as a result of the search carried out optionally after confirmation of login or verification of the authentication based on the search criterion/search criteria in the telephone book database (TBD) and according to the protocol (PK) is received by the telephone/network interface (TNS), forwarded to the central control unit (ZSE), interpreted by the protocol interpreter (PK1) based on marks (MK) in the protocol (PK) in terms of its semantics and thus is used directly for telephone-specific operations,
wherein the telephone is a DECT handset (SLH) of a DECT telephone comprising a DECT base station (DEE) connected to the packet-switched network (PNW) and/or the circuit-switched network (LNW), or a WLAN handset (SLH) of a WLAN telephone comprising a "WLAN access point" (DEE) connected to the packet-switched network (PNW) and/or the circuit-switched network (LNW), or a telephone handset (THA) connected via an ETHERNET cable (EK) to a "router" (DEE) which is connected to the packet-switched network (PNW) and/or the circuit-switched network (LNW),
wherein the DECT handset (SLH), the WLAN handset (SLH) or the telephone handset (THA) comprises a telephone display (DPL) on which the search result is displayed,
wherein each of the data sets has a data set structure specified by marks (MK) of the dedicated protocol (PK) so that the telephone (TE) uses the individual data in the respective data set independently of one another, and
wherein a data type is used as the search criterion for the telephone book search, wherein the data type used as a search criterion for the telephone book search is optionally last name, first name, location, street, country, postal code, fax number, industry, special branch, email address or call number.

11. The telephone (TE) of claim 10, **characterized in that** the search result includes a complete data set (DS) stored in the telephone book database (TBD) with respect to the search criterion.

12. The telephone (TE) of claim 10 or 11, **characterized in that** the user interface (BSS), the central control device (ZSE) comprising the telephone book memory (TBS) and the protocol interpreter (PKI) as well as the telephone/network interface (TNS) are configured such and the central control device (ZSE) comprising the user interface (BSS) and the telephone/network interface (TNS) is connected such that in the targeted telephone book search initiated by the first event (Fig. 3) the search result found with respect to the search criterion is output to the telephone user (TEB) and/or stored in the local directory memory (TBS) of the telephone (TE).

13. The telephone (TE) of claim 12, **characterized in that** the user interface (BSS), the central control device (ZSE) comprising the telephone book memory (TBS) and the protocol interpreter (PKI) as well as the telephone/network interface (TNS) are configured such and the central control device (ZSE) comprising the user interface (BSS) and the telephone/network interface (TNS) is connected such that the search result found with respect to the search criterion is at least partially, in particular comprising the name and the call number or the name and the location of the subscriber found, output with the call signaling.

14. The telephone (TE) of any of claims 10 to 13, **characterized in that** the user interface (BSS), the central control device (ZSE) comprising the telephone book memory (TBS) and the protocol interpreter (PK1) as well as the telephone/network interface (TNS) are configured such and the central control device (ZSE) comprising the user interface (BSS) and the telephone/network interface (TNS) is connected such that in the targeted open telephone book search initiated by the second event (Fig. 4) and
(i) in the case of a single data set (DS) found with respect to the search criterion this data set (DS) is output to the telephone user (TEB), stored in a local telephone book memory (TBS) of the telephone (TE) and/or directly used for an outgoing telephone call to a remote subscriber corresponding to the found data set (DS); or
(ii) in the case of several data sets (DS1, DS2, DS3) found with respect to the search criterion, these are output to the telephone user (TEB) and one data set (DS) is selected out of the output data sets (DS1, DS2, DS3) and this selected data set (DS) is either stored in a local telephone book memory (TBS) of the telephone (TE) or is directly used for an outgoing telephone call to a remote subscriber corresponding to the selected data set (DS).

15. The telephone (TE) of claim 14, **characterized in that** the user interface (BSS), the central control device (ZSE) comprising the telephone book memory (TBS) and the protocol interpreter (PKI) as well as the telephone/network interface (TNS) are configured such and the central control device (ZSE) is connected to the user interface (BSS) and the telephone/network interface (TNS) such that the targeted open telephone book search is carried out regularly by using the name and address of a telephone subscriber listed in the telephone book database (TBD) as the search criterion, and the search result includes a complete data set (DS) stored in the telephone book database (TBD) with respect to the search criterion.

16. The telephone (TE) of claim 14, **characterized in that** the user interface (BSS), the central control device (ZSE) comprising the telephone book memory (TBS) and the protocol interpreter (PKI) as well as the telephone/network interface (TNS) are configured such and the central control device (ZSE) is connected to the user interface (BSS) and the telephone/network interface (TNS) such that the telephone book search is carried out inversely by using the call number of a telephone subscriber listed in the telephone book database (TBD) as a search criterion and the search result includes a complete data set (DS) stored in the telephone book database (TBD) with respect to the search criterion.

17. The telephone (TE) of any of claims 10 to 16, **characterized in that** the user interface (BSS), the central control device (ZSE) comprising the telephone book memory (TBS) and the protocol interpreter (PKI) as well as the telephone/network interface (TNS) are configured such and the central control device (ZSE) is connected to the user interface (BSS) and the telephone/network interface (TNS) such that the search result transmitted by the server at a larger data amount to be transmitted is processed sequentially.

18. The telephone (TE) of claim 10, **characterized in that** the user interface (BSS), the central control device (ZSE) comprising the telephone book memory (TBS) and the protocol interpreter (PKI) as well as the telephone/network interface (TNS) are configured such and the central control device (ZSE) is connected to the user interface (BSS) and the telephone/network interface (TNS) such that the login and the authentication are implemented by transmitting a user name and a password to the server (SE).

## Revendications

1. Procédé, résidant dans l'utilisation par un téléphone (TE) de données d'annuaire mémorisées dans des ensembles de données (DS, DS1, DS2, DS3), dans une base de données d'annuaire (TBD) d'un serveur (SE), comportant les étapes de procédé suivantes :
a) le téléphone (TE) connecté via un réseau de transmission par paquets (PNW) et/ou via un réseau de transmission filaire (LNW) est physiquement connecté via le serveur (SE) avec la base de données d'annuaire (TBD),
b) le téléphone (TE) initie par un premier événement (FIG 3), amorçant l'accès à la base de données d'annuaire, un appel téléphonique entrant avec transmission du numéro d'appel, une recherche dans l'annuaire ciblée au niveau du résultat de la recherche et/ou par un deuxième événement (FIG 4) amorçant un accès à la base de données d'annuaire (TBD), l'interrogation du menu « recherche dans l'annuaire » par un utilisateur du téléphone (TEB), une recherche ouverte dans l'annuaire dans la base de données d'annuaire (TBD), ciblée au niveau du résultat de la recherche,
c) avec le démarrage de la recherche dans l'annuaire, le téléphone (TE) établit une connexion logique avec le serveur (SE) comportant la base de données d'annuaire (TBD) et transmet au serveur (SE) selon un protocole dédié (PK), directement ou indirectement après notification ou authentification auprès du serveur (SE) respectivement auprès de la base de données d'annuaire (TBD) au moins un critère de recherche pour la recherche dans l'annuaire au serveur (SE),
d) le cas échéant, après confirmation de la notification ou vérification de l'authentification, à l'aide du critère de recherche/des critères de recherche, le serveur (SE) procède à la recherche dans la base de données d'annuaire (TBD) et transmet selon le protocole (PK) le résultat de la recherche au téléphone (TE), le résultat de la recherche comprenant des ensembles de données mémorisés dans la base de données d'annuaire, chacun desdits ensembles de données présentant une structure d'ensemble de données repérée par des marquages (MK) du protocole dédié (PK), les marquages indiquant le type de données respectif des données contenues dans l'ensemble de données, comme par exemple patronyme, prénom, localité, rue, pays, code postal, numéro de télécopie, branche, branche particulière, adresse courriel ou numéro d'appel, suite à quoi, le téléphone est en mesure de comprendre la sémantique du résultat de la recherche et utilise ainsi les données individuelles dans l'ensemble de données en question, indépendamment les uns des autres pour des opérations téléphoniques spécifiques, comme par exemple un appel téléphonique sortant ou une Calling Line Identification Présentation ;
un élément mobile DECT(SLH) d'un téléphone DECT connecté sur un poste de base DECT (DEE) raccordé sur le réseau de transmission par paquets (PNW) et/ou sur le réseau de transmission filaire (LNW) étant utilisé à titre de téléphone (TE) ou un élément mobile WLAN (SLH) d'un téléphone WLAN connecté sur un « WLAN-Access Point » (DEE) raccordé sur le réseau de transmission par paquets (PNW) et/ou sur le réseau de transmission filaire (LNW) étant utilisé à titre de téléphone (TE) ou un appareil téléphonique manuel (THA), qui via un câble (EK) est connecté sur un « routeur » (DEE) raccordé sur le réseau de transmission par paquets (PNW) et/ou sur le réseau de transmission filaire (LNW) étant utilisé à titre de téléphone (TE),
e) le résultat de la recherche est représenté sur un écran téléphonique (DPL) de l'élément mobile DECT (SLH), de l'élément mobile WLAN (SLH) ou de l'appareil téléphonique manuel (THA)

2. Procédé selon la revendication 1, **caractérisé en ce que** dans la base de données d'annuaire (TBD), le résultat de la recherche contient un ensemble de données (DS) complet pour le critère de recherche.

3. Procédé selon la revendication 1 ou 2, **caractérisé en ce que** lors de la recherche ciblée dans l'annuaire initiée par le premier événement (FIG 3), le résultat de la recherche trouvé pour le critère de recherche est édité à l'attention de l'utilisateur du téléphone (TEB) et/ou mémorisé dans une mémoire d'annuaire locale (TBS) du téléphone (TE).

4. Procédé selon la revendication 3, **caractérisé en ce que** le résultat de la recherche trouvé pour le critère de recherche est édité au moins partiellement, notamment avec mention du patronyme et du nom et de la localité de l'abonné trouvé, en concomitance avec la signalisation d'appel.

5. Procédé selon l'une quelconque des revendications 1 à 4, **caractérisé en ce que** lors d'une recherche ouverte ciblée dans l'annuaire initiée par le deuxième événement (FIG 4) et
i) dans le cas d'un seul ensemble de données (DS) trouvé pour le critère de recherche, ledit ensemble de données (DS) est édité à l'attention de l'utilisateur du téléphone (TEB), mémorisé dans une mémoire d'annuaire locale (TBS) du téléphone (TE) et/ou directement utilisé pour un appel téléphonique sortant d'un abonné éloigné correspondant à l'ensemble de données (DS) trouvé ou
ii) dans le cas de plusieurs ensembles de données (DS1, DS2, DS3) trouvés pour le critère de recherche, ceux-ci sont édités à l'attention de l'utilisateur du téléphone (TEB) et à partir des ensembles de données (DS1, DS2, DS3) édités est sélectionné un ensemble de données (DS) et ledit ensemble de données (DS) sélectionné est soit mémorisé dans une mémoire d'annuaire locale (TBS) du téléphone (TE) ou directement utilisé pour un appel téléphonique sortant d'un abonné éloigné correspondant à l'ensemble de données (DS) trouvé.

6. Procédé selon la revendication 5, **caractérisé en ce que** la recherche ouverte ciblée dans l'annuaire est réalisée régulièrement **en ce qu'**en tant que critère de recherche sont utilisés le patronyme et l'adresse d'un abonné téléphonique listé dans la base de données d'annuaire (TBD) et le résultat de la recherche contient un ensemble de données (DS) complet mémorisé dans la base de données d'annuaire (TBD) pour le critère de recherche.

7. Procédé selon la revendication 6, **caractérisé en ce que** la recherche dans l'annuaire est réalisée inversement **en ce qu'**en tant que critère de recherche est utilisé le numéro de téléphone d'un abonné téléphonique listé dans la base de données d'annuaire (TBD) et le résultat de la recherche contient un ensemble de données (DS) complet mémorisé dans la base de données d'annuaire (TBD) pour le critère de recherche.

8. Procédé selon l'une quelconque ou plusieurs des revendications 1 à 7, **caractérisé en ce que**, dans le cas d'une quantité de données à transmettre assez importante, le résultat de la recherche est transmis séquentiellement.

9. Procédé selon la revendication 1, **caractérisé en ce que** la notification et l'authentification s'effectuent par la transmission au serveur (SE) d'un nom d'utilisateur et d'un mot de passe.

10. Téléphone (TE), destiné à l'utilisation de données d'annuaire mémorisées dans des ensembles de données d'une base de données d'annuaire (TBD) d'un serveur (SE), présentant les caractéristiques suivantes :
a) une interface téléphone/réseau (TNS), par l'intermédiaire de laquelle le téléphone (TE) est physiquement connecté sur un réseau de transmission par paquets (PNW) et/ou un réseau de transmission filaire (LNW), ainsi que via ledit réseau (PNW) avec le serveur (SE) et la base de données d'annuaire (TBD),
b) une interface utilisateur (BSS), un système de commande centralisé (ZSE) pourvu d'une mémoire d'annuaire (TBS) et d'un interprète de protocole (PKI), ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que
b1) par un premier événement (FIG 3) amorçant l'accès à la base de données d'annuaire (TBD), un appel téléphonique entrant avec transmission du numéro d'appel, une recherche ciblée dans l'annuaire au niveau du résultat de la recherche et/ou par un deuxième événement (FIG 4) amorçant l'accès à la base de données d'annuaire (TBDE), l'interrogation du menu « recherche dans l'annuaire » par un utilisateur du téléphone (TEB), une recherche ouverte dans l'annuaire ciblée au niveau du résultat de la recherche est initiée dans la base de données d'annuaire (TBD),
b2) avec le démarrage de la recherche dans l'annuaire, une connexion logique sur le serveur (SE) comportant la base de données d'annuaire (TBD) est établie et directement ou indirectement après la notification ou l'authentification près du serveur (SE), respectivement près de la base de données d'annuaire (TBD), au moins un critère de recherche pour la recherche dans l'annuaire est transmis au serveur (SE) selon un protocole dédié (PK),
b3) le résultat de la recherche transmis par le serveur (SE) selon le protocole (PK) suite à la recherche réalisée par le serveur dans la base de données d'annuaire (TBD), le cas échéant après confirmation de la notification et vérification de l'authentification à l'aide du critère de recherche/des critères de recherche est réceptionné par l'interface téléphone/réseau (TNS), retransmis au système de commande centralisé (ZSE), interprété par l'interprète de protocole (PK) au niveau de sa sémantique et ainsi directement utilisé pour des opérations téléphoniques spécifiques ;
le téléphone étant un élément mobile DECT (SLH) d'un téléphone DECT connecté sur un poste de base DECT (DEE) raccordé sur le réseau de transmission par paquets (PNW) et/ou sur le réseau de transmission filaire (LNW) ou un élément mobile WLAN (SLH) d'un téléphone WLAN connecté sur un « WLAN-Access Point » (DEE) raccordé sur le réseau de transmission par paquets (PNW) et/ou sur le réseau de transmission filaire (LNW) ou un appareil téléphonique manuel (THA), qui via un câble ETHERNET (EK) est connecté sur un « routeur » (DEE) raccordé sur le réseau de transmission par paquets (PNW) et/ou sur le réseau de transmission filaire (LNW);
l'élément mobile DECT (SLH), l'élément mobile WLAN-(SLH) ou l'appareil téléphonique manuel (THA) comportant un écran téléphonique (DPL) sur lequel est représenté le résultat de la recherche ;
chacun des ensembles de données présentant une structure d'ensemble de données repérée par des marquages (MK) du protocole dédié (PK), de sorte que le téléphone (TE) utilise indépendamment les unes des autres les données individuelles dans l'ensemble de données en question et
en tant que critère de recherche pour la recherche dans l'annuaire étant utilisé un type de données, le type de donnée utilisé en tant que critère de recherche pour la recherche dans l'annuaire étant de manière optionnelle le patronyme, le prénom, la localité, la rue, le pays, le code postal, le numéro de télécopie, la branche, la branche particulière, l'adresse courriel ou le numéro d'appel.

11. Téléphone (TE) selon la revendication 10, **caractérisé en ce que** dans la base de données d'annuaire (TBD), le résultat de la recherche contient un ensemble de données (DS) complet pour le critère de recherche.

12. Téléphone (TE) selon la revendication 10 ou 11, **caractérisé en ce que** l'interface utilisateur (BSS), le système de commande centralisé (ZSE) avec la mémoire d'annuaire (TBS) et l'interprète de protocole (PKI), ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que lors de la recherche ciblée dans l'annuaire initiée par le premier événement (FIG 3), le résultat de la recherche trouvé pour le critère de recherche soit édité à l'attention de l'utilisateur du téléphone (TEB) et/ou mémorisé dans la mémoire d'annuaire locale (TBS) du téléphone (TE).

13. Téléphone (TE) selon la revendication 12, **caractérisé en ce que** l'interface utilisateur (BSS), le système de commande centralisé (ZSE) avec la mémoire d'annuaire (TBS) et l'interprète de protocole (PKI), ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que le résultat de la recherche trouvé pour le critère de recherche soit édité au moins partiellement, notamment sous mention du patronyme et du numéro d'appel ou du patronyme et de la localité de l'abonné trouvé, avec la signalisation d'appel.

14. Téléphone (TE) selon l'une quelconque des revendications 10 à 13, **caractérisé en ce que** l'interface utilisateur (BSS), le système de commande centralisé (ZSE) avec la mémoire d'annuaire (TBS) et l'interprète de protocole (PKI) ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte, que lors de la recherche ouverte ciblée dans l'annuaire, initiée par le deuxième événement (FIG 4) et
i) dans le cas d'un seul ensemble de données (DS) trouvé pour le critère de recherche, ledit ensemble de données (DS) soit édité à l'attention de l'utilisateur du téléphone (TEB), mémorisé dans une mémoire d'annuaire locale (TBS) du téléphone (TE) et/ou directement utilisé pour un appel téléphonique sortant d'un abonné éloigné correspondant à l'ensemble de données (DS) trouvé ou
ii) dans le cas de plusieurs ensembles de données (DS1, DS2, DS3) trouvés pour le critère de recherche, ceux-ci soient édités à l'attention de l'utilisateur du téléphone (TEB) et à partir des ensembles de données (DS1, DS2, DS3) édités il soit sélectionné un ensemble de données (DS) et ledit ensemble de données (DS) sélectionné soit mémorisé dans une mémoire d'annuaire locale (TBS) du téléphone (TE) ou directement utilisé pour un appel téléphonique sortant d'un abonné éloigné correspondant à l'ensemble de données (DS) trouvé.

15. Téléphone (TE) selon la revendication 14, **caractérisé en ce que** l'interface utilisateur (BSS), le système de commande centralisé (ZSE) avec la mémoire d'annuaire (TBS) et l'interprète de protocole (PKI) ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que la recherche ouverte ciblée dans l'annuaire soit réalisée régulièrement **en ce qu'**en tant que critère de recherche soient utilisés le patronyme et l'adresse d'un abonné téléphonique listé dans la base de données d'annuaire (TBD) et que le résultat de la recherche contienne un ensemble de données (DS) complet mémorisé dans la base de données d'annuaire (TBD) pour le critère de recherche.

16. Téléphone (TE) selon la revendication 14, **caractérisé en ce que** l'interface utilisateur (BSS), le système de commande centralisé (ZSE) avec la mémoire d'annuaire (TBS) et l'interprète de protocole (PKI) ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que la recherche dans l'annuaire soit réalisée inversement **en ce qu'**en tant que critère de recherche soit utilisé le numéro de téléphone d'un abonné téléphonique listé dans la base de données d'annuaire (TBD) et que le résultat de la recherche contienne un ensemble de données (DS) complet mémorisé dans la base de données d'annuaire (TBD) pour le critère de recherche.

17. Téléphone (TE) selon l'une quelconque des revendications 10 à 16, **caractérisé en ce que** l'interface utilisateur (BSS), le système de commande centralisé (ZSE) avec la mémoire d'annuaire (TBS) et l'interprète de protocole (PKI) ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que le résultat de la recherche transmis de manière séquentielle par le serveur dans le cas d'une quantité de données à transmettre assez importante, soit traité par séquences.

18. Téléphone (TE) selon la revendication 10, **caractérisé en ce que** l'interface utilisateur (BSS), le système de commande centralisé (ZSE) avec la mémoire d'annuaire (TBS) et l'interprète de protocole (PKI) ainsi que l'interface téléphone/réseau (TNS) sont conçus de telle sorte et le système de commande centralisé (ZSE) est connecté sur l'interface utilisateur (BSS) et sur l'interface téléphone/réseau (TNS) de telle sorte que la notification et l'authentification s'effectuent par transmission au serveur (SE) d'un nom d'utilisateur et d'un mot de passe.
